# FASCICULE DE BREVET EUROPEEN

(11) **EP 0 854 269 B1**
(45) Date de publication et mention de la délivrance du brevet: **29.08.2001**
(21) Numéro de dépôt: 98400063.8
(22) Date de dépôt: 15.01.1998
(51) Int. Cl.: F01D 9/02, F23R 3/06

(54) **Contrôle des débits de refroidissement pour des chambres de combustion à haute température**
Kühlstromregelungseinrichtung für Brennkammern mit hoher Temperatur
Control device for the flux of cooling air for high temperature combustion chamber

(30) Priorité: 16.01.1997 FR 9700384
(43) Date de publication de la demande: 22.07.1998
(73) Titulaire: SNECMA MOTEURS, 75015 Paris (FR)
(72) Inventeur: Ansart, Denis Roger Henri, 77590 Bois Le Roi (FR); Sandelis, Denis Jean Maurice, 77370 Nangis (FR)

(56) Documents cités:
- EP-A- 0 615 055
- FR-A- 2 635 577
- GB-A- 980 363

## Description

L'invention concerne le contrôle des débits de refroidissement des parois des chambres de combustion à haute température.

Parmi les qualités requises pour une chambre de combustion, on peut citer le fait d'avoir une perte de charge du plus bas niveau le long des parois de la chambre de combustion afin de dégrader le moins possible l'énergie du fluide de refroidissement, et d'obtenir une répartition de température à l'entrée de la turbine la plus homogène possible, de façon circonférentielle et radiale.

Actuellement, les cycles thermodynamiques choisis pour les turboréacteurs à usage civil et militaire conduisent à des niveaux de température à la sortie de la chambre de combustion de plus en plus importants.

Ces températures élevés permettent de diminuer la consommation spécifique du moteur.

L'augmentation du niveau de température dans la chambre de combustion conduit à obtenir des nombres de Mach plus élevés. Ces nombres peuvent atteindre localement une valeur M = 0,25. De plus, dans les chambres de combustion qui sont équipées dans leur zone aval d'un convergent accentué, notamment les chambres de combustion à deux têtes séparées, l'évolution du nombre de Mach n'est pas négligeable de l'amont vers l'aval.

Cette évolution a une influence sur les performances de la chambre de combustion et en particulier sur les valeurs des débits d'air de refroidissement.

En effet, une augmentation des nombres de Mach dans le foyer de combustion, d'amont en aval, entraîne une diminution de la pression statique dans la chambre de combustion dans le sens de l'écoulement des gaz. Il en résulte un accroissement de la perte de charge le long des parois de la chambre de combustion de l'amont vers l'aval. Or, pour une configuration donnée d'un orifice d'introduction d'air de refroidissement, la valeur du débit d'air introduit est fonction de la perte de charge et varie dans le même sens que cette dernière.

La perte de charge peut presque doubler sa valeur dans la zone convergente, il s'ensuit que le débit d'air de refroidissement peut augmenter localement de 30%, si les parois de la chambre ont une perméabilité uniforme sur toute leur étendue. L'accentuation du profit radial que l'on rencontre sur les chambres de combustion à deux têtes amplifie les valeurs de ces variations de perte de charge et de débit de refroidissement.

Or, l'augmentation du débit de refroidissement que l'on constate à la sortie de la chambre de combustion est incompatible avec les profils de température souhaités à la sortie de la chambre de combustion. Nous pouvons citer le facteur radial de température (F.R.T.) et le facteur local de température (F.L.T.) qui caractérisent le point le plus chaud du profil des températures.

Le but de l'invention est d'obtenir une optimisation du profil de température à la sortie d'une chambre de combustion fonctionnant à très haute température en réglant le débit d'air de refroidissement dans les zones de paroi situées à l'aval de la chambre de combustion.

L'invention concerne donc une chambre de combustion, notamment pour turbomachine possédant un axe de symétrie et qui est délimitée par deux parois annulaires mutuellement écartées et munies chacune d'une pluralité d'orifices traversant, constituant une multiperforation destinée notamment au passage d'un air de refroidissement de ladite paroi, et par un fond transversal audit axe de symétrie et situé en amont par rapport au sens général d'écoulement des gaz dans ladite chambre de combustion, et qui présente une ouverture aval de sortie, ladite chambre présentant une section qui converge vers la sortie dans sa zone aval, ce qui entraîne un accroissement de la vitesse des gaz et un accroissement local de la perte de charge le long des parois axiales dans cette zone aval lorsqu'on se rapproche de la sortie.

Cette chambre de combustion est caractérisée par le fait que la multiperforation est réalisée de telle manière que la perméabilité en débit d'air de refroidissement des parois axiales dans la zone aval varie en décroissant vers l'aval de ladite chambre de combustion, afin de compenser les effets de l'accroissement de la perte de charge, la perméabilité étant définie par le débit de fluide de refroidissement à une pression donnée susceptible de traverser une surface donnée de paroi soumise à une perte de charge donnée.

Cette variation de la perméabilité peut être réalisée soit en diminuant le nombre d'orifices par unité de surface d'amont en aval, soit en faisant varier les dimensions des orifices ou leurs inclinaisons, soit encore en augmentant l'épaisseur des parois de l'amont vers l'aval.

D'autres avantages et caractéristiques de l'invention ressortiront à la lecture de la description suivante faite à titre d'exemple et en référence au dessin annexé dans lequel :
la figure 1 montre la zone aval d'une chambre de combustion actuelle à deux têtes, et les valeurs de Mach M, des pertes de charge et des débits d'air de refroidissement entre l'amont et l'aval, les parois de cette chambre de combustion ayant une perméabilité sensiblement homogène ;
la figure 2 montre les variations de la perméabilité des parois de l'amont vers l'aval d'une chambre de combustion selon la présente invention ;
la figure 3 montre un mode de réalisation de invention dans lequel l'angle d'inclinaison des orifices varie de l'amont vers l'aval ;
la figure 4 montre en coupe et en détail l'inclinaison d'un orifice d'une paroi axiale ;
la figure 5 montre une variante de réalisation de l'invention, dans laquelle les parois de la chambre de combustion ont des épaisseurs qui augmentent de l'amont vers l'aval ;
la figure 6 montre une chambre de combustion dans laquelle la perte de charge est maintenue constante le long des parois axiales par des perturbateurs prévus dans les circuits de l'air de refroidissement.

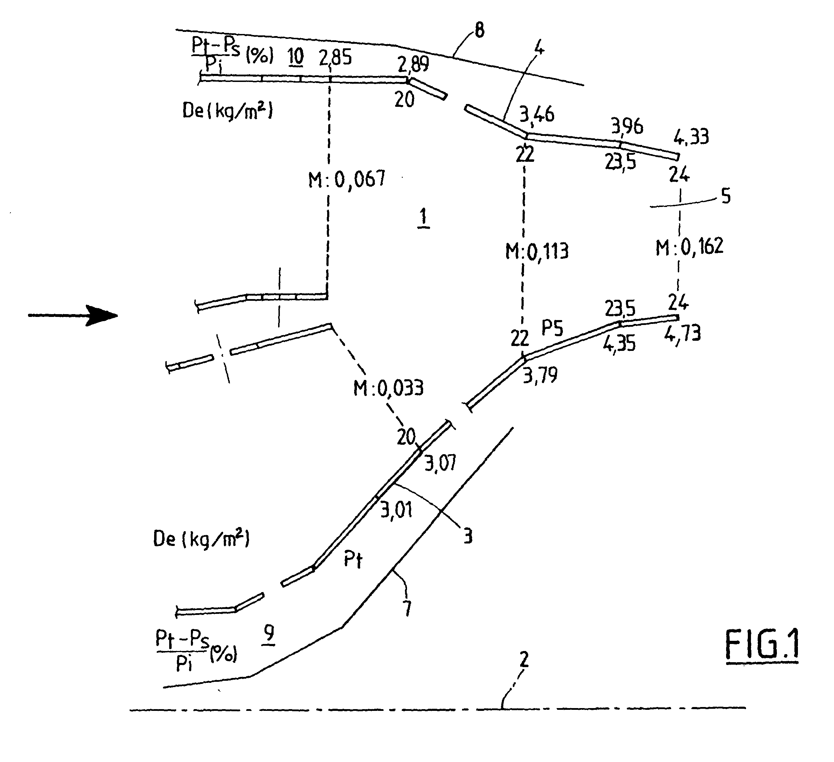

La figure 1 représente la partie aval d'une chambre de combustion 1 annulaire à deux têtes, d'axe de symétrie 2, délimitée par une paroi axiale interne 3 et une paroi axiale externe 4 mutuellement écartées l'une de l'autre. Les parois axiales 3 et 4 définissent en aval une sortie annulaire 5 par laquelle les gaz de combustion sont délivrés vers un distributeur de turbine non représenté sur le dessin. Les parois axiales 3 et 4 sont reliées en amont par au moins un fond équipé de deux dispositifs d'injection de carburant et séparées radialement par un séparateur 6. La zone aval de cette chambre de combustion 1 est fortement convergente vers la sortie 5, et les parois axiales 3 et 4 sont munies d'une multiperforation.

Les parois axiales 3 et 4 sont disposées respectivement à distance d'un carter interne 7 et d'un carter externe 8. L'espace annulaire 9 délimité par le carter interne 7 et la paroi axiale interne 3 sert à la circulation d'un débit d'air utilisé pour la dilution des gaz dans la zone aval de la chambre de combustion et le refroidissement de la paroi axiale 3.

De même, l'espace annulaire 10 délimité par le carter externe 8 et la paroi axiale externe 4 permet d'alimenter la zone aval de la chambre de combustion 1 en air de dilution et de délivrer un air de refroidissement de la paroi axiale 4.

Sur la figure 1, on a représenté les valeurs des vitesses locales des gaz en plusieurs endroits de l'enceinte de la chambre de combustion en nombre de Mach, les valeurs des pertes de charges en pourcentage par rapport à la pression Pt régnant dans les espaces annulaires 9 et 10, le long des parois axiales 3 et 4, ainsi que les débits d'air De de refroidissement délivré dans la chambre de combustion par mètre carré des parois 3 et 4 à diverses distances de la sortie 5 dans le cas où la perméabilité des parois axiales 3 et 4 est homogène d'amont en aval, la perméabilité étant définie par le débit d'air à la pression Pt pouvant pénétrer dans la chambre de combustion 1, par unité de surface et pour une perte de charge donnée.

On voit sur la figure 1 que la valeur M varie dans un rapport de 1 à 5 entre l'amont et l'aval, que la perte de charge croît vers la sortie 5, avec un rapport voisin de 2 entre la perte de charge régnant près de la sortie 5 et la perte de charge en amont de la zone aval, et que les débits d'air par mètre carré vont en croissant vers l'aval et varient entre 20 kg/m² et 24 kg/m².

Cette variation de débit d'air entre l'amont et l'aval est préjudiciable aux performances de la chambre de combustion, et résulte de la diminution de la pression statique Ps des gaz entre l'amont et l'aval par suite de la croissance de la vitesse des gaz.

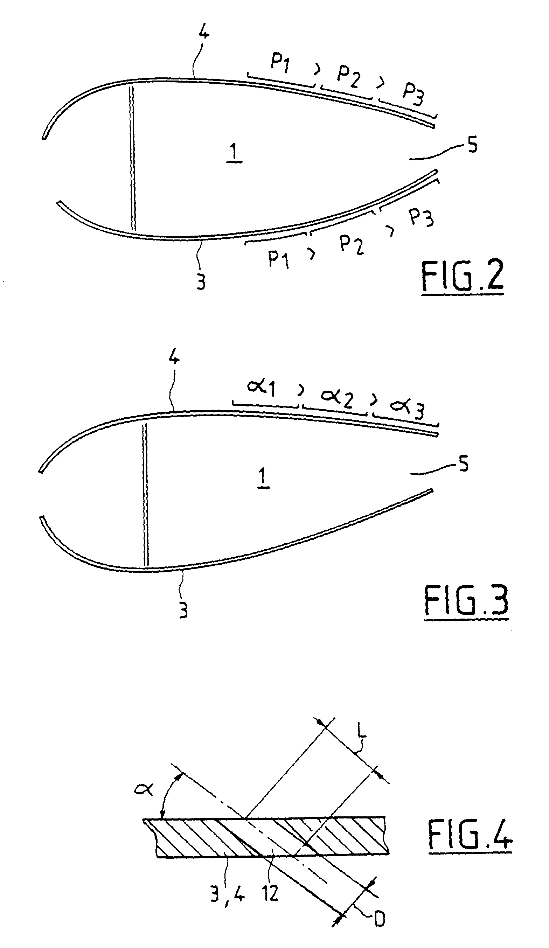

La figure 2 montre une chambre de combustion 1 conforme à l'invention dont les parois axiales 3 et 4 sont également munies d'une multiperforation permettant l'introduction d'un débit d'air de refroidissement dans la chambre 1.

Selon la présente invention, la perméabilité Pi en débit d'air de refroidissement des viroles situés en aval de la chambre de combustion 1 et constituant les parois axiales 3 et 4 varie en décroissant vers la sortie 5.

Si on désigne par P1, P2, P3 les perméabilités des trois viroles successives disposées d'amont en aval dans la zone aval de la chambre de combustion 1,on a : P1 > P2 > P3.

Pour faire varier la perméabilité, on peut faire varier le nombre d'orifices 12 à dimensions constantes par unité de surface, ou faire varier les dimensions des orifices 12.

Une perméabilité circonférentielle différente est aussi envisageable dans l'axe et entre les injecteurs de carburant afin d'optimiser la valeur de la richesse locale. Cette disposition peut être déterminée par l'analyse des résultats d'un calcul tridimensionnel.

La variation de la perméabilité peut également être obtenue, ainsi que cela est montré sur les figures 3 et 4, pour une densité homogène d'orifices de multiperforation, en faisant varier l'angle d'inclinaison axiale a des orifices 12. Cette solution permet d'ajuster le coefficient de débit de chaque orifice 12 en fonction du rapport des dimensions longueur/diamètre (L/D) des orifices 12. Si on désigne par α1, α2, α3 les angles d'inclinaison des orifices 12 de trois viroles successives dans la zone aval de la chambre de combustion 1 par rapport aux plans tangents aux viroles à l'entrée des orifices 12, on a α1 > α2 > 3α.

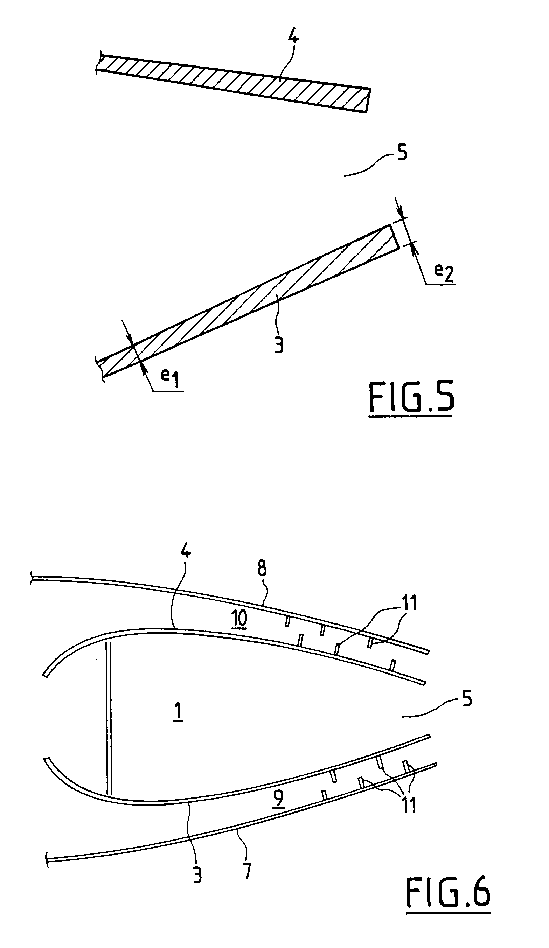

L'évolution du rapport L/D peut être obtenue avec des inclinaisons constants des orifices 12 en faisant varier l'épaisseur des parois axiales 3 et 4, dans la zone aval de la chambre de combustion, cette épaisseur e allant croissant de l'amont vers l'aval, comme cela est représenté sur la figure 5.

Si on désigne par e1 l'épaisseur des parois 3 et 4 en aval de la zone aval et par e2 l'épaisseur des parois 3 et 4 au voisinage de la sortie 5, on a par exemple e1 = 0,7e2.

Enfin, ainsi que cela est montré sur la figure 6, il est envisageable d'interposer des perturbateurs en quinconce, ou en chicane, sur les carters de chambre 7, 8 et les parois axiales 3, 4 dans les portions aval des espaces annulaires 9 et 10 pour conserver constante la perte de charge le long des parois axiales 3, 4.

Il est également possible de régler le débit d'air de refroidissement en combinant les diverses solutions proposées.

## Revendications

1. Chambre de combustion, notamment pour turbomachine possédant un axe de symétrie(2) et qui est délimitée par deux parois annulaires (3, 4) mutuellement écartées et munies chacune d'une pluralité d'orifices (12) traversant, constituant une multiperforation destinée notamment au passage d'un air de refroidissement de ladite paroi (3, 4), et par un fond transversal audit axe de symétrie et situé en amont par rapport au sens général d'écoulement des gaz dans ladite chambre de combustion, et qui présente une ouverture aval de sortie (5), ladite chambre présentant une section qui converge vers la sortie (5) dans sa zone aval, ce qui entraîne un accroissement de la vitesse des gaz et un accroissement local de la perte de charge le long des parois axiales (3, 4) dans cette zone aval lorsqu'on se rapproche de la sortie (5), caractérisée par le fait que la multiperforation est réalisée de telle manière que la perméabilité en débit d'air de refroidissement des parois axiales (3, 4) dans la zone aval varie en décroissant vers l'aval de ladite chambre de combustion, afin de compenser les effets de l'accroissement de la perte de charge, la perméabilité étant définie par le débit de fluide de refroidissement à une pression donnée susceptible de traverser une surface donnée de paroi soumise à une perte de charge donnée.

2. Chambre de combustion selon la revendication 1, caractérisée par le fait que le nombre d'orifices (12) par unité de surface diminue de l'amont vers l'aval.

3. Chambre de combustion selon la revendication 1, caractérisée par le fait que le diamètre des orifices (12) décroît vers l'aval.

4. Chambre de combustion selon la revendication 1, caractérisée par le fait que l'angle d'inclinaison (α) des orifices par rapport au plan tangent à la paroi décroît de l'amont vers l'aval.

5. Chambre de combustion selon la revendication 1, caractérisée par le fait que l'épaisseur (e) des parois axiales croît de l'amont vers l'aval.

## Patentansprüche

1. Brennkammer, insbesondere eine Brennkammer für Turbotriebwerke, die eine Symmetrieachse (2) hat und die von zwei ringförmigen, voneinander beabstandeten Wänden (3, 4), die jeweils mehrere durchgehende Öffnungen (12) aufweisen, die eine Mehrfachperforierung bilden, die insbesondere für den Durchgang von Kühlungsluft für diese Wand (3, 4) vorgesehen ist, sowie von einem quer zu der genannten Symmetrieachse liegenden Boden, der sich bezogen auf die allgemeine Strömungsrichtung der Gase in dieser Brennkammer vorne befindet, umgrenzt wird, und die eine hintere Ausgangsöffnung (5) aufweist, wobei diese Kammer einen Querschnitt hat, der zu dem in ihrem hinteren Bereich befindlichen Ausgang (5) hin konvergiert, was ein Anwachsen der Gasgeschwindigkeit und eine stellenweise Erhöhung des Druckverlusts entlang der axialen Wände (3, 4) in diesem hinteren Bereich, in Annäherung an den Ausgang (5), nach sich zieht,
**dadurch gekennzeichnet,**
**dass** die Mehrfachperforation dergestalt ausgeführt ist, dass die Durchlässigkeit der axialen Wände (3, 4) sich gegenüber dem Kühlungsluftstrom in diesem hinteren Bereich ändert, indem sie dem hinteren Ende dieser Brennkammer zu abnimmt, damit die Auswirkungen des steigenden Druckverlusts kompensiert werden, wobei die Durchlässigkeit durch den Kühlungsfluidstrom definiert ist, der bei einem gegebenen Druck in der Lage ist, bei einem gegebenen Druckverlust durch eine gegebene Wandfläche zu gelangen.

2. Brennkammer nach Anspruch 1,
**dadurch gekennzeichnet,**
**dass** die Anzahl der Öffnungen (12) pro Flächeneinheit von vorn nach hinten abnimmt.

3. Brennkammer nach Anspruch 1,
**dadurch gekennzeichnet,**
**dass** der Durchmesser der Öffnungen (12) nach hinten abnimmt.

4. Brennkammer nach Anspruch 1,
**dadurch gekennzeichnet,**
**dass** der Neigungswinkel (α) der Öffnungen zu der Ebene, die tangential zu der Wand liegt, von vorn nach hinten abnimmt.

5. Brennkammer nach Anspruch 1,
**dadurch gekennzeichnet,**
**dass** die Dicke (e) der axialen Wände von vorn nach hinten zunimmt.

## Claims

1. Combustion chamber, particularly for a turbomachine having an axis of symmetry (2) and which is delimited by two annular walls (3, 4) which are spaced apart and each equipped with a number of through-orifices (12) constituting a multiperforation intended, in particular, for the passage of air for cooling the said wall (3, 4), and by an end wall transverse to the said axis of symmetry and situated upstream with respect to the general direction of flow of the gases in the said combustion chamber, and which has a downstream outlet opening (5), the said chamber having a section which converges towards the outlet (5) in its downstream zone, which leads to an increase in the velocity of the gases and to a local increase in the pressure drop along the axial walls (3, 4) in this downstream zone on approaching the outlet (5), **characterized in that** the multiperforation is produced in such a way that the cooling air flow permeability of the axial walls (3, 4) in the downstream zone varies in that it decreases towards the downstream end of the said combustion chamber, so as to compensate for the effects of the increase in the pressure drop, the permeability being defined by the flow of cooling fluid at a given pressure capable of passing through a given area of wall subjected to a given pressure drop.

2. Combustion chamber according to Claim 1, **characterized in that** the number of orifices (12) per unit area decreases from the upstream end towards the downstream end.

3. Combustion chamber according to Claim 1, **characterized in that** the diameter of the orifices (12) decreases in the downstream direction.

4. Combustion chamber according to Claim 1, **characterized in that** the angle of inclination (α) of the orifices with respect to the plane tangential to the wall decreases from the upstream end towards the downstream end.

5. Combustion chamber according to Claim 1, **characterized in that** the thickness (e) of the axial walls increases from the upstream end towards the downstream end.
